# EUROPEAN PATENT APPLICATION

(11) **EP 2 068 051 A1**
(43) Date of publication of application: **10.06.2009**
(21) Application number: 06810655.8
(22) Date of filing: 27.09.2006
(51) Int. Cl.: F16J 15/06

(54) **GASKET**

(71) Applicant: NIHONKENSUI CO., LTD., Fukuoka-shi Fukuoka 812-0011 (JP); Nagawa, Masato, Kitakyuushu-shi, Fukuoka 802-0823 (JP)
(72) Inventor: NAGAWA, Masato, Kitakyusyu-shi Fukuoka 802-0823 (JP); NODA, Hideki, Kitakyusyu-shi Fukuoka 801-0856 (JP)
(74) Representative: Winter, Brandl, Fürniss, Hübner Röss, Kaiser, Polte Partnerschaft Patent- und Rechtsanwaltskanzlei
(86) International application number: PCT/JP2006/319195
(87) International publication number: WO 2008/038353

(57) **Abstract**

A gasket that, when it is tightened from both sides by flanges etc., elastically deforms to produce reaction force acting against the tightening force, achieving improved sealing ability, and that is manufacturable at low cost by press working. One or more first annular curved ridges (12, 13) are formed on one side of a plate body (27) having a round hole (11) at its center and formed of an elastic material, and annular curved grooves (14, 15) are formed on the other side, at portions corresponding to the first annular curved ridges (12, 13). One or more second annular curved ridges (16) are formed on the other side, at positions not superposed on the first annular curved ridges (12, 13), and annular curved grooves (17) are formed on one side, at positions corresponding to the second annular curved ridges (16). Elastically deformable annular connection sections (18, 19) are formed between the first annular curved ridges (12, 13) and the second annular curved ridges (16).

## Description

### FIELD OF THE INVENTION

The invention relates to a gasket used at a connecting area between two tubes, and having a sealing capability that prevents gas or fluid flowing through tubes from leaking out, and further preventing external gas and fluid from entering into tubes.

### BACKGROUND ART

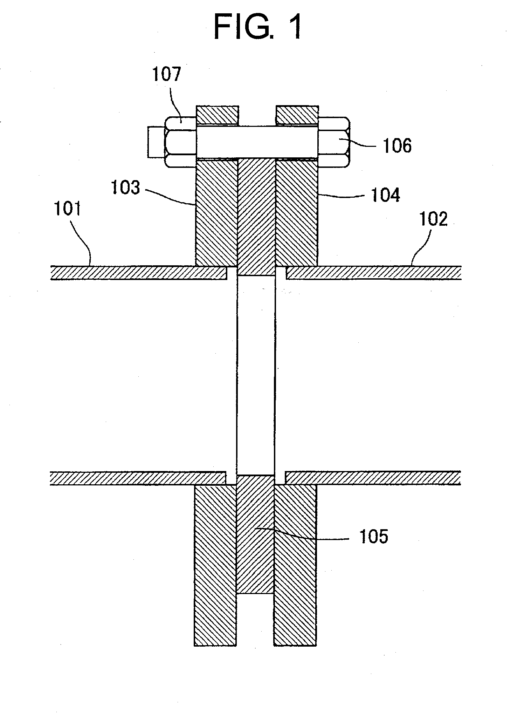

Two tubes have been conventionally connected to each other in such a way as illustrated in FIG. 1. Tubes 101 and 102 are formed to have flanges 103 and 104 at ends thereof. A gasket 105 is sandwiched between the flanges 103 and 104. The tubes 101 and 102 are connected to each other by screwing the flanges 103 and 104 with each other by means of bolts 106 and nuts 107. The flanges 103 and 104 make close contact with opposite surfaces of the gasket 105 to ensure the seal therebetween, preventing gas or fluid flowing through the tubes 101 and 102 from leaking out or preventing external gas and fluid from entering into the tubes 101 and 102.

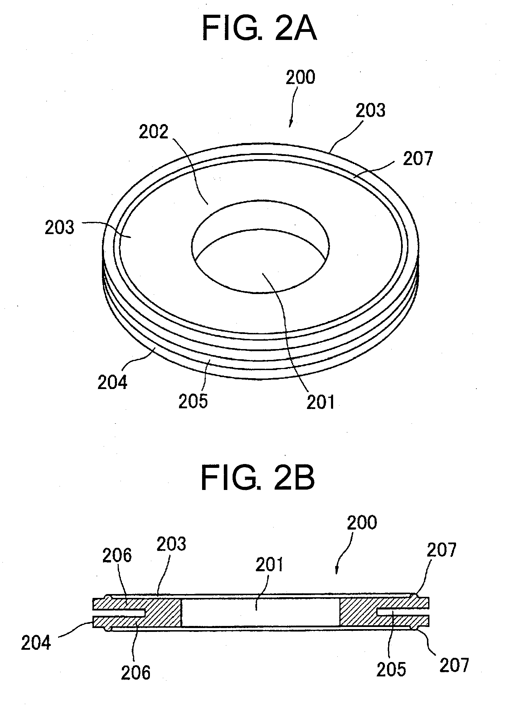

The gasket has been conventionally composed of a mixture of asbestos as a primary component and rubber or carbon, because gas or fluid flowing through a tube has a high temperature or a high pressure or is intensively alkaline or acidic. However, since the use of asbestos was absolutely prohibited since the year 2008, a gasket composed of a material other than asbestos is strongly suggested. One of them is disclosed in the patent reference 1. FIG. 2 illustrates a structure of the suggested gasket. FIG. 2A is a perspective view of the gasket, and FIG. 2B is a cross-sectional view of the gasket.

As illustrated in FIG. 2, the gasket 200 is comprised of an annular plate 203 formed centrally with a round hole 201, and having contact surfaces 202 at opposite surfaces. The annular plate 203 is formed at a peripheral wall 204 thereof with an annular groove 205 to define close contact portions 206. A projection 207 is formed coaxially with the hole 201 on each of the contact surfaces 202 above the close contact portions 206. The annular plate 203 of the gasket 200 is composed of a metal having elasticity. Thus, when the gasket 200 is sandwiched between flanges and screwed with bolts and nuts, as illustrated in FIG. 1, the projections 207 are compressed onto surfaces of the flanges by virtue of the elasticity of the close contact portions 206, ensuring that the projections 207 and surfaces of the flanges make close contact with each other, and are sealed to each other.

The above-mentioned gasket has superior sealing performance, and can be expected to have superior sealing capability also to gas and fluid in high temperature or pressure, or intensively alkaline or acidic gas and fluid, by providing corrosion resistance to a surface thereof. However, the gasket has an accompanying problem in that since it is necessary to form the annular groove 205 at the peripheral wall 204 of the annular plate 203 by cutting, a great number of fabrication steps is unavoidable, with high fabrication costs. Furthermore, since the sealing capability can be accomplished only by the annular projection 207 formed on a surface of the annular plate 203 in the vicinity of a peripheral end of the close contact portions 206, for instance, as illustrated in FIG. 1, when corrosive gas or fluid flows in the tubes 101 and 102, the corrosive gas or fluid enters into a space defined by the surfaces of the flanges 103 and 104, the contact surfaces 202 of the annular plate 203, and the projections 207, resulting in the corrosive gas or fluid remaining in the space. In addition, there is a problem that since the single projection 207 formed on the contact surface 202 is used for providing sealing capability, adequate sealing performance is not always possible.

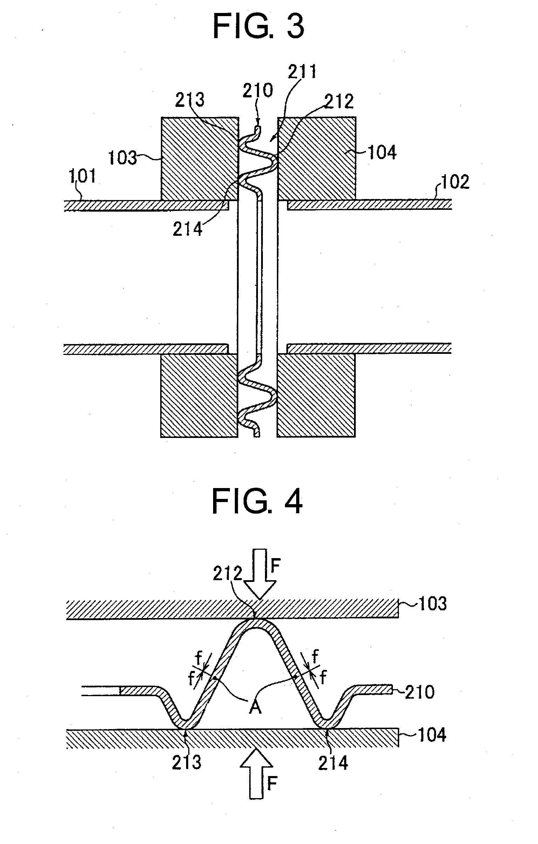

The patent reference 2 suggests another conventional gasket. The gasket is comprised of a metal plate having a curved portion 211 comprised of a primary curved portion 212 and subsidiary curved portions 213 and 214. As illustrated in FIG. 3, the gasket 210 is sandwiched between the flanges 103 and 104, and the flanges 103 and 104 are screwed to each other by means of bolts and nuts (not illustrated), ensuring the tubes 101 and 102 are joined to each other in a sealed condition.

When the gasket 210 comprised of a metal plate having the curved portion 211 comprised of the primary curved portion 212 and the subsidiary curved portions 213 and 214 is used for joining the tubes 101 and 102 to each other, as illustrated in FIG. 4, the gasket 210 is compressed at opposite surfaces thereof by the flanges 103 and 104 with intensive forces "F." Since the gasket 210 is in the form of a annular plate, and the primary curved portion 212 and the subsidiary curved portions 213 and 214 are formed by continuous curves, their elastic deformation in a radial direction is restricted (the primary curved portion 212 and the subsidiary curved portions 213 and 214 are not enlarged in a radial direction). Accordingly, when component forces "f" derived from the force "F" act on portions "A" of the gasket 210 in opposite directions, if the component forces "f" were great, the gasket 210 might be buckled or plastically deformed at the portions "A", or the primary curved portion 212 and the subsidiary curved portions 213 and 214 might be recessed (plastic deformation) at summits thereof. If such plastic deformation other than elastic deformation occurs at the gasket 210, a problem is caused in that the sealing performance of the gasket 210 is degraded. Furthermore, since the gasket 210 cannot accomplish great elastic deformation, it would be necessary to finish the surfaces of the gasket 210 and the flanges 103 and 104 at which they make contact with each other, to be mirror-finished surfaces in order to maintain the sealing performance, resulting in high costs for such mirror-finishing process.
Patent reference 1: Japanese Patent Application Publication No. 11-22826
Patent reference 2: Japanese Patent Application Publication No. 11-230355

### DISCLOSURE OF THE INVENTION

### ADVANTAGES PROVIDED BY THE INVENTION

In accordance with the present invention in the first aspect, since the connection portion which is at least partially planar and is capable of elastically deforming connects the first and second annular raised portions to each other, when a force acts on the first and second annular raised portions, the connection portion elastically deforms, and the resultant elastic reaction force provides a compressive force to the first and second annular raised portions for compressing sealing surfaces thereof, ensuring enhancement in sealing performance. In addition, the structure as mentioned above makes it possible to fabricate the gasket in a single step in press working, ensuring reduction in fabrication costs.

In accordance with the present invention in the second aspect, since the central hole is circular, quadrangular or polygonal, the gasket may be used for joining circular, quadrangular or polygonal tubes to each other.

In accordance with the present invention in the third aspect, since the plate is composed of metal having elasticity, and includes an anticorrosive coating layer on a surface thereof, the gasket can preferably be used for joining tubes to each other in which corrosive gas or fluid passes.

In accordance with the present invention in the fourth aspect, since the anticorrosive coating layer is composed of a material having flexibility, it is possible to enhance the sealing performance.

In accordance with the present invention in the fifth aspect, since the plate is composed of a non-metal anticorrosive material having elasticity, the gasket can be preferably used for joining tubes to each other in which corrosive gas or fluid passes.

### PROBLEMS TO BE SOLVED BY THE INVENTION

In view of the above-mentioned problems, it is an object of the present invention to provide a gasket which is capable of, even if tightened at opposite sides thereof by flanges, elastically deforming to produce a reaction force against a force generated due to tightening the gasket, thereby ensuring enhancement in sealing performance, and being fabricated through pressing work, thereby ensuring low fabrication costs.

### SOLUTION TO THE PROBLEMS

In order to accomplish the above-mentioned object, the present invention provides, in a first aspect, a gasket comprised of a plate centrally formed with a hole, and composed of elastic material, the plate including one or more first annular raised portion(s) formed outside of the hole on one of surfaces thereof, an annular recessed portion(s) formed in association with the first annular raised portion(s) on the other surface thereof, one or more second annular raised portion(s) formed outside the hole on the other surface such that the second annular raised portion(s) does(do) not overlap the first annular raised portion(s), an annular recessed portion(s) formed in association with the second annular raised portion(s) on the one of surfaces, and a connection portion formed between the first and second annular raised portions, the connection portion being at least partially planar, and being capable of being elastically deformed.

The present invention in a second aspect is **characterized in that** the hole is circular, quadrangular, or polygonal in the gasket in accordance with the present invention in the first aspect.

The present invention in a third aspect is **characterized in that** the plate is comprised of metal having elasticity, and includes an anticorrosive coating layer on a surface thereof in the gasket in accordance with the present invention in the first aspect.

The present invention in a fourth aspect is **characterized in that** the anticorrosive coating layer is composed of a material having flexibility in the gasket in accordance with the present invention in the third aspect.

The present invention in a fifth aspect is **characterized in that** the plate is composed of a non-metal anticorrosive material having elasticity in the gasket in accordance with the present invention in the first aspect.

### BEST MODE FOR REDUCING THE INVENTION TO PRACTICE

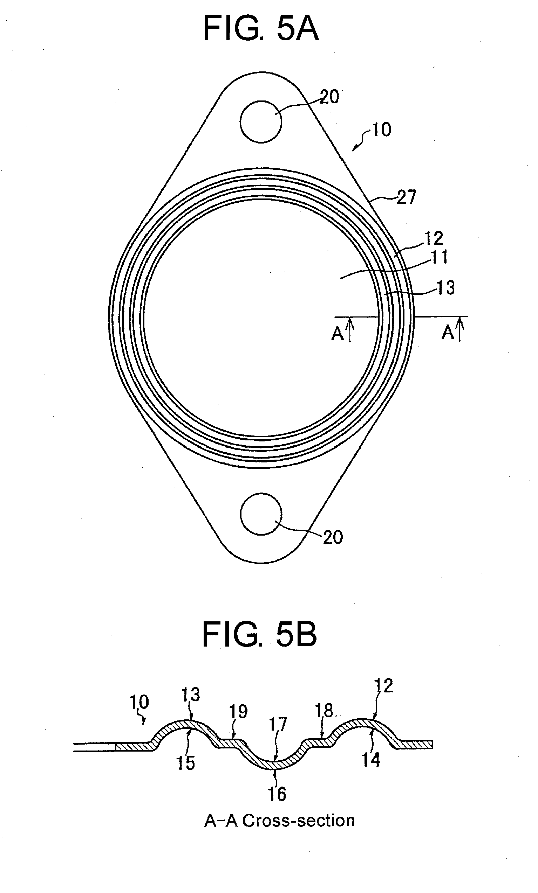

Hereinbelow, embodiments in accordance with the present invention are explained in detail with reference to drawings. FIG. 5 illustrates an example of the gasket in accordance with an embodiment of the present invention. FIG. 5A is a plan view, and FIG. 5B is a cross-sectional view taken along the line A-A. As illustrated, the gasket 10 is comprised of a plate 27 centrally formed with a circular hole 11, and composed of elastic material. The plate 27 includes a plurality of ("two" in FIG. 5) first annular raised portions 12 and 13 formed outside of the hole 11 on one of surfaces (front surface) thereof, and being analogous with the hole 11 and each having a circular cross-section, annular recessed portion 14 and 15 formed in association with the first annular raised portions 12 and 13 on the other surface (rear surface) thereof, and each having a circular cross-section, a single second annular raised portion 16 formed outside the hole 11 on the other surface (rear surface) such that the second annular raised portion 16 does not overlap the first annular raised portions 12 and 13, and being analogous with the hole 11 and having a circular cross-section, an annular recessed portion 17 formed in association with the second annular raised portion 16 on the one of surfaces (front surface), and having a circular cross-section, and connection portions 18 and 19 formed between the first annular raised portions 12 and 13 and the second annular raised portion 16, and being planar and analogous with the hole 11. The reference numeral "20" indicates holes through which bolts are to be inserted.

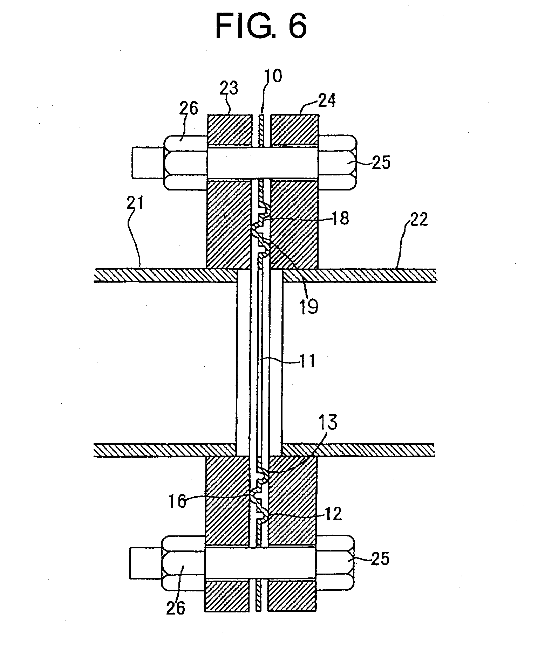

As illustrated in FIG. 6, the gasket 10 having the above-mentioned structure is sandwiched between flanges 23 and 24 formed at ends of the tubes 21 and 22, respectively, such that a center of the circular hole of the plate 27 is in alignment with centers of the tubes 21 and 22, and the flanges 23 and 24 are joined with each other by means of bolts 25 and nuts 26. As explained in detail later, the connection portions 18 and 19 of the gasket 10 are elastically deformed by the compressive force, and thus, the first annular raised portions 12 and 13 of the gasket 10 make contact with the flange 24 and the second annular raised portion 16 makes contact with the flange 23 under a highly compressive force comprised of a reaction force caused by the elasticity of the connection portions, resulting in that a space defined by the summits of the first annular raised portions 12 and 13 and the second annular raised portions 16, the gasket 10, and the flanges 23 and 24 is hermetically sealed.

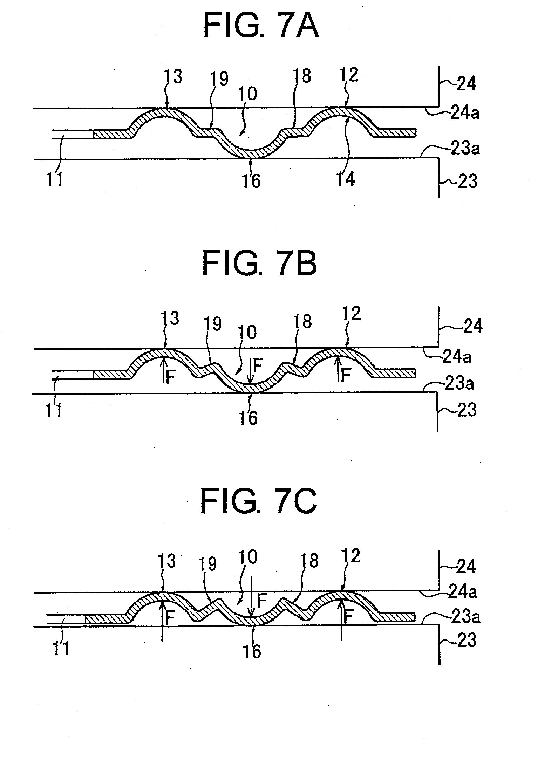

FIGs. 7A to 7C are enlarged views showing how the gasket is deformed when the gasket 10 is sandwiched between the flanges 23 and 24, and a force by which the gasket 10 is sandwiched between the flanges is gradually made higher. As illustrated, since the first annular raised portions 12 and 13 both formed on one of surfaces (front surface) of the plate 27 of the gasket 10 and the second annular raised portion 16 formed on the other surface (rear surface) are arranged to deviate from each other such that they do not overlap each other, if the gasket 10 is intensively sandwiched between the flanges 23 and 24, the planar connection portions 18 and 19 of the gasket 10 are vertically deformed, as illustrated in FIGs. 7(b) and 7(c). A reaction force "F" caused by the elastic deformation of the connection portions 18 and 19 causes the first annular raised portions 12 and 13 and the second annular raised portion 16 to compress a surface 24a of the flange 24 and a surface 23a of the flange 23, respectively. As a result, a space defined by the summits of the first annular raised portions 12 and 13 and the surface 24a of the flange 24 is hermetically sealed from the summit of the second annular raised portion 16 and the surface 23a of the flange 23.

In the above-mentioned embodiment, though the gasket is designed to include the single second annular raised portion 16, the gasket may be designed to include two second annular raised portions 16 such that they do not overlap the first annular raised portions 12 and 13, in which case, the second annular raised portions 16 and the first annular raised portions 12 and 13 may be connected to each other through planar connection portions. The gasket may be designed to include two or more first annular raised portions and/or second annular raised portions, in which case, each of the first annular raised portions and each of the second annular raised portions is connected to each other through a planar connection portion.

Since the reaction force "F" of the gasket 10 is dependent on the elastic force of the plate 27, the plate 27 is composed of metal having elasticity, such as steel, in order to have intensive sealing force. Furthermore, since the gasket 10 is comprised of the plate 27 centrally formed with the circular hole 11, and including one or more first annular raised portions 12 and 13 formed outside of the hole 11 on the front surface thereof, one or more second annular raised portion(s) 16 formed outside the hole 11 on the rear surface, and the connection portions 18 and 19 formed between the first annular raised portions 12 and 13 and the second annular raised portion(s) 16, the gasket can be readily formed by press working. Thus, it is possible to fabricate a mass of gaskets accomplishing superior sealing performance, at low costs.

In the case that the plate 27 of the gasket 10 is composed of steel, an anticorrosive treatment is applied to the gasket 10 in order to allow the gasket to use in a corrosive environment such as strong-alkaline or strong-acidic environment. For instance, the gasket 10 may be covered with an anticorrosive coating layer composed of, for instance, a Teflon (Registered trademark) coating layer, an anticorrosive rubber coating layer, a copper-plated layer or a zinc-plated layer. In the case that the anticorrosive coating layer is composed of flexible material such as a Teflon (Registered trademark) coating layer or an anticorrosive rubber coating layer, even if the flanges 23 and 24 have recessed and raised portions such as flaws at surfaces thereof, the coating layer deforms in accordance with the recessed and raised portions of the surfaces of the flanges 23 and 24, and makes close contact with the surfaces, ensuring enhancement in sealing performance. In addition, the plate 27 may be composed of stainless steel such as SUS. As an alternative, the plate 27 may be composed of anticorrosive non-metal material having elasticity, for instance, plastic such as polyethylene terephthalate or polyimide.

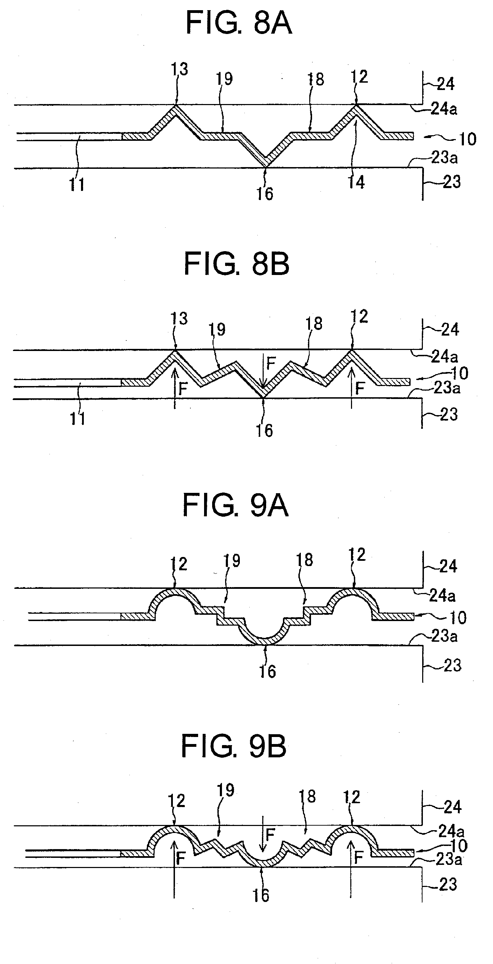

In the above-mentioned embodiment, the first annular raised portions 12 and 13 and the second annular raised portions 16 are designed to have a circular cross-section, however, the cross-section is not to be limited to an arcuate one. For instance, as illustrated in FIG. 8, the first annular raised portions 12 and 13 and the second annular raised portions 16 may be designed to have a triangular cross-section, in which case, if the gasket 10 were compressed at opposite sides thereof by the flanges 23 and 24, the connection portions 18 and 19 were elastically deformed, as illustrated in FIG. 8B, and the force generated by the elastic deformation causes the first annular raised portions 12 and 13 and the second annular raised portions 16 to be compressed onto the surfaces 24a and 23a of the flanges 24 and 23, respectively. The first annular raised portions 12 and 13 and the second annular raised portions 16 may be designed to have a rectangular or elliptic cross-section, if the summits of the portions make contact with the surfaces of the flanges in a line or a strip, and the portions hermetically seal a resultant space.

It is not always necessary that the connection portions 18 and 19 are entirely planar. For instance, as illustrated in FIG. 9, the connection portions 18 and 19 may be formed step-wise. The connection portions 18 and 19 could have any shape if the first annular raised portions 12 and 13 and the second annular raised portions 16 are not joined to each other through continuous arcuate surfaces, and further, at least a part of the connection portions 18 and 19 is formed as a planar surface not continuous with arcuate surfaces of the first annular raised portions 12 and 13 and the second annular raised portions 16, and still further, the connection portions 18 and 19 would be elastically deformed to provide a reaction force caused by the elastic force to the first annular raised portions 12 and 13 and the second annular raised portions 16, when the gasket is compressed.

In the above-mentioned gasket 10, the plate 27 is designed to centrally have the circular hole 11. The central hole is not to be limited to a circular hole. The hole may be designed to be polygonal such as a quadrangle in dependence on a cross-section of tubes to be joined to each other. Furthermore, the first annular raised portions 12 and 13 and the second annular raised portions 16 are designed to be analogous with the central hole, however, it is not always necessary for the first annular raised portions 12 and 13 and the second annular raised portions 16 to be analogous with the central hole, if the first annular raised portions 12 and 13 and the second annular raised portions 16 are annular so as to surround the central hole therein.

As mentioned above, since the first annular raised portions 12 and 13 and the second annular raised portions 16 in the gasket 10 are joined to each other through the connection portions 18 and 19 both capable of elastically deforming, the gasket 10 is not buckled (is not plastically deformed) unlike the gasket 210 suggested in the patent reference 2 (see FIGs. 3 and 4), ensuring a margin with respect to both a force by which the flanges 23 and 24 are compressed to each other, and a gap to be formed between the flanges 23 and 24. In contrast, since the gasket 210 suggested in the patent reference 2 may be buckled (plastically deformed), it is necessary to accurately control both a force by which the flanges 23 and 24 are compressed to each other, and a gap to be formed between the flanges 23 and 24. Thus, whereas the flanges 23 and 24 between which the gasket 10 in accordance with the present embodiment is sandwiched may be much deformed at a portion remote from the bolts 25 and nuts 26, the flanges between which the gasket 210 suggested in the patent reference 2 is sandwiched are not allowed to be much deformed.

Furthermore, since the gasket 210 suggested in the patent reference 2 attempts to accomplish the hermeticity only by the summits of the primary curved portion 212 and the subsidiary curved portions 213 and 214, the summits of the primary curved portion 212 and the subsidiary curved portions 213 and 214 of the gasket 210, and a portion of the flanges 103 and 104 with which the summits make contact have to be finished (mirror-finished) with high accuracy. In contrast, since the hermeticity is accomplished by the elastic deformation of both the summits of the first annular raised portions 12 and 13 and the second annular raised portions 16 and the connection portions 18 and 19 in the gasket 10, it is not necessary to finish the summits of the first annular raised portions 12 and 13 and the second annular raised portions 16, and surfaces of the flanges 23 and 24 with high accuracy.

While the present invention has been described in connection with certain preferred embodiments, it is to be understood that the subject matter encompassed by way of the present invention is not to be limited to those specific embodiments. On the contrary, it is intended for the subject matter of the present invention to include all alternatives, modifications and equivalents as described in the claims, specification and drawings. Even if not explicitly described in the specification and/or drawings, any shapes and materials are included within the spirit and scope of the present invention, if they provide the same functions and performances as those provided by the present invention.

### INDUSTRIAL APPLICABILITY

As having been explained so far, the gasket in accordance with the present invention is comprised of a plate centrally formed with a hole, and composed of elastic material, the plate including one or more first annular raised portion(s) formed outside of the hole on one of surfaces thereof, an annular recessed portion(s) formed in association with the first annular raised portion(s) on the other surface thereof, one or more second annular raised portion(s) formed outside the hole on the other surface such that the second annular raised portion(s) does(do) not overlap the first annular raised portion(s), an annular recessed portion(s) formed in association with the second annular raised portion(s) on one of the surfaces, and a connection portion formed between the first and second annular raised portions, the connection portion being at least partially planar, and being capable of being elastically deformed. Thus, when the gasket is sandwiched between flanges formed at ends of flanges, and the flanges are screwed to each other, the connection portion elastically deforms, and the resultant elastic reaction force provides a compressive force to the first and second annular raised portions for compressing sealing surfaces thereof, ensuring enhancement in sealing performance. In addition, the structure as mentioned above makes it possible to fabricate the gasket in a single step in press working, ensuring reduction in fabrication costs.

Furthermore, since the plate is composed of metal having elasticity, and includes an anticorrosive coating layer on a surface thereof, the gasket can preferably be used for joining tubes to each other in which corrosive gas or fluid passes such as high-temperature, high-pressure, strong-alkaline, and strong-acid gas or fluid.

Furthermore, since the anticorrosive coating layer is composed of a material having flexibility, it is possible to enhance the sealing performance, because even if the flanges have recessed and raised portions such as flaws at surfaces thereof, the coating layer makes close contact with the recessed and raised portions.

Furthermore, since the plate is composed of a non-metal anticorrosive material having elasticity, the gasket can preferably be used for joining tubes to each other in which corrosive gas or fluid passes.

### BRIEF DESCRIPTION OF THE DRAWINGS

[FIG. 1] FIG. 1 illustrates an example of connection of tubes through the use of a conventional gasket.
[FIG. 2] FIG. 2 illustrates an example of a conventional gasket. FIG. 2A is a perspective view, and FIG. 2B is a cross-sectional view.
[FIG. 3] FIG. 3 illustrates an example of connection of tubes through the use of a conventional gasket.
[FIG. 4] FIG. 4 illustrates how the conventional gasket is compressed.
[FIG. 5] FIG. 5 illustrates an example of a structure of the gasket in accordance with the present invention. FIG. 5A is a plan view, and FIG. 5B is a cross-sectional view taken along the line A-A.
[FIG. 6] FIG. 6 illustrates an example of connection of tubes through the use of the gasket in accordance with the present invention.
[FIG. 7] FIG. 7 illustrates how the gasket in accordance with the present invention is compressed.
[FIG. 8] FIG. 8 illustrates an example of a structure of the gasket in accordance with the present invention and how the gasket is compressed.
[FIG. 9] FIG. 9 illustrates an example of a structure of the gasket in accordance with the present invention and how the gasket is compressed.

### INDICATION BY REFERENCE NUMERALS

- 10: Gasket
- 11: Circular hole
- 12: First annular raised portion
- 13: First annular raised portion
- 14: Annular recessed portion
- 15: Annular recessed portion
- 16: Second annular raised portion
- 17: Annular recessed portion
- 18: Connection portion
- 19: Connection portion
- 20: Holes
- 21: Tube
- 22: Tube
- 23: Flange
- 24: Flange
- 25: Bolt
- 26: Nut
- 27: Plate

## Claims

1. A gasket comprised of a plate centrally formed with a hole, and composed of elastic material, said plate including one or more first annular raised portion(s) formed outside of said hole on one of surfaces thereof, an annular recessed portion(s) formed in association with said first annular raised portion(s) on the other surface thereof, one or more second annular raised portion(s) formed outside said hole on said other surface such that said second annular raised portion(s) does(do) not overlap said first annular raised portion(s), an annular recessed portion(s) formed in association with said second annular raised portion(s) on said one of the surfaces, and a connection portion formed between said first and second annular raised portions, said connection portion being at least partially planar, and being capable of being elastically deformed.

2. The gasket as set forth in claim 1, wherein said hole is circular, quadrangular, or polygonal.

3. The gasket as set forth in claim 1, wherein said plate is comprised of metal having elasticity, and includes an anticorrosive coating layer on a surface thereof.

4. The gasket as set forth in claim 3, wherein said anticorrosive coating layer is composed of a material having flexibility.

5. The gasket as set forth in claim 1, wherein said plate is composed of a non-metal anticorrosive material having elasticity.
